(19) Europäisches Patentamt
European Patent Office
Office européen des brevets

(11) **EP 1 939 704 B1**

(12) **EUROPÄISCHE PATENTSCHRIFT**

(45) Veröffentlichungstag und Bekanntmachung des Hinweises auf die Patenterteilung:
**06.06.2012 Patentblatt 2012/23**

(51) Int Cl.:
***G05D 17/02*** *(2006.01)*

(21) Anmeldenummer: **07121762.4**

(22) Anmeldetag: **28.11.2007**

(54) **Verfahren und Vorrichtung zur Schätzung des Lastenmoments bei drehzahl- oder positionsgeregelten elektrischen Antrieben**

Method and device for estimating the load torque of electrical drives regulated by revolution speed or position

Procédé et dispositif destinés à l'estimation du moment de charge lors d'entraînements électriques réglés selon la vitesse ou la position

(84) Benannte Vertragsstaaten:
**DE FR GB**

(30) Priorität: **29.12.2006 DE 102006062591**

(43) Veröffentlichungstag der Anmeldung:
**02.07.2008 Patentblatt 2008/27**

(73) Patentinhaber: **ROBERT BOSCH GMBH**
**70442 Stuttgart (DE)**

(72) Erfinder: **Vollmer, Ulrich**
**73266 Bissingen (DE)**

(56) Entgegenhaltungen:
**DE-A1- 3 708 266    US-B1- 6 184 644**

**Beschreibung**

Die Erfindung betrifft ein Verfahren und eine Vorrichtung zur Schätzung des Lastenmoments bei elektrischen Antrieben, insbesondere deren Anwendung bei einer elektronischen Drehmomentbegrenzung oder Drehmomentabschaltung, wie z.B. in Elektrowerkzeugen.

Das von einer elektrischen Maschine erzeugte, innere Drehmoment kann anhand von mathematischen Modellgleichungen aus dem Phasenstrom (Phasenströmen) berechnet werden, so weit diese erfasst werden. Weiterhin kann aus dem Drallsatz das zur Beschleunigung bzw. Abbremsen der trägen Masse des Motors benötigte Moment berechnet werden, wenn die aktuelle Winkelbeschleunigung bekannt ist. Die Differenz aus erzeugtem inneren Moment und dem Beschleunigungs- bzw. Bremsmoment entspricht dem am Motor anliegenden Lastmoment. Das Lastmoment entspricht dem vom Motor abgegebenen zum Antrieb einer Last benötigten Drehmoment. Dies stellt ein herkömmliches Verfahren zum Schätzen eines Lastmomentes dar. Die Beschleunigung wird bei gängigen Verfahren jedoch nicht direkt gemessen, sondern aus einer Winkelmessung ermittelt, indem diese zweifach nach der Zeit abgeleitet wird. Dies hat jedoch den Nachteil, dass ein etwaig vorhandenes Messrauschen stark verstärkt wird und zudem die Beschleunigung nur mit zeitlicher Verzögerung zur Verfügung steht. Dies führt entsprechend zu einer Ungenauigkeit des geschätzten Lastmoments.

Alternativ kann mithilfe eines erweiterten Zustandsbeobachters oder Kalman-Filters das Lastmoment modellbasiert geschätzt werden. Auch bei diesem Verfahren ist der Einfluss eines Messrauschens erheblich und der Implementierungsaufwand hoch.

Ein Wert für das an der Maschine anliegende Lastmoment kann dazu verwendet werden, das Lastmoment in Geräten auf elektronischem Wege zu begrenzen. Dies kann beispielsweise bei Elektrowerkzeugen verwendet werden, die eine Drehmomentenbegrenzung benötigen, wie beilspielsweise elektrische Schraubendreher und dgl.. Üblicherweise wird bei Elektrowerkzeugen eine solche Drehmomentenbegrenzung durch eine mechanische Überlastkupplung auf der Abtriebswelle des Getriebes realisiert, die bei Erreichen einer voreingestellten Grenzlast den Kraftschluss unterbricht.

Alternativ kann die Drehmomentbegrenzung auf elektronischem Wege realisiert werden, indem die Stromaufnahme des Elektromotors, die näherungsweise proportional zum Drehmoment ist, auf einen entsprechenden Wert begrenzt wird. Dadurch wird jedoch das elektromagnetisch erzeugte innere Moment begrenzt und nicht das nach außen abgegebene, was dazu führt, dass bei eingestellter Drehmomentbegrenzung auch die Beschleunigung des Motors begrenzt wird, was zu einem unerwünscht langsamen Anlauf führen kann. Zudem wird aufgrund der Massenträgheit des Rotors beim Abbremsen des Motors das gewünschte abgegebene Drehmoment überschritten.

Die Druckschrift DE 37 08 266 offenbart ein Servosystem mit einem Steuersystem und einem zu steuernden Objekt, wobei eine Transferfunktion des Servosystems vorgesehen ist. Es ist schaltungsmäßig vor dem Steuersystem ein Vorkompensationssystem mit einer umgekehrten Funktion der Transferfunktion so angeordnet, dass ein Steuerkommando in das Vorkompensationssystem einzugeben ist.

Aus der Druckschrift US 6,184,644 B1 ist ein Lagesteuergerät zum Einstellen der Lage eines Objekts mithilfe eines Servomotors bekannt, wobei eine Ablenkungskompensationseinheit vorgesehen ist, um einen Kompensationswert zum Korrigieren eines Steuerfehlers bereitzustellen. Der Kompensationswert kann basierend auf einem Positionsvorgabewert eines Beschleunigungsvorgabewerts und/oder eines Drehmomentvorgabewerts ermittelt werden.

Es ist Aufgabe der vorliegenden Erfindung, ein Verfahren und eine Antriebsvorrichtung zur genaueren und einfacheren Schätzung des Lastmoments, das an einer drehzahl- oder positionsgeregelten elektrischen Maschine anliegt, zur Verfügung zu stellen und in Abhängigkeit dieses Schätzwertes einen sicheren Betrieb zu gewährleisten. Weiterhin ist es Aufgabe der vorliegenden Erfindung, ein Gerät mit einem Antrieb zur Verfügung zu stellen, bei dem das vom Antrieb abgegebene Lastmoment für einen sicheren Betrieb begrenzt ist

Diese Aufgabe wird durch das Verfahren zur Schätzung des Lastmoments gemäß Anspruch 1, durch die Antriebsvorrichtung zur Schätzung des Lastmoments und durch das Gerät gemäß des nebengeordneten Anspruchs 7 gelöst.

Weitere vorteilhafte Ausgestaltungen der Erfindung sind in den abhängigen Ansprüchen angegeben.

Gemäß einem Aspekt der Erfindung ist ein Verfahren zum Schätzen eines Lastmomentes bei einem geregelten elektrischen Antrieb vorgesehen. Der Antrieb wird abhängig von einer Angabe eines Solldrehmoments als Stellgröße angesteuert, wobei die Angabe des Soll-Drehmoments der Summe einer in einer Vorsteuerung ermittelten Angabe eines Vorsteuerungs-Drehmoments und einer in einer Regelung ermittelten Angabe eines Regelungs-Drehmoments entspricht. Das Vorsteuerungs-Drehmoment entspricht einem Anteil des Soll-Drehmoments, der ein Ansteuern des Antriebs in einem nicht durch das Lastmoment belasteten Zustand bewirkt. Als Schätzwert für das Lastmoment wird die Angabe des Regelungs-Drehmoments bereitgestellt, wobei bei Erreichen eines Schwellwertes des Lastmoments der Antrieb gestoppt wird.

Eine Idee der vorliegenden Erfindung basiert darauf, bei einem drehzahl- oder positionsgeregelten elektrischen Antrieb, z.B. einem Elektromotor, die Drehzahl- bzw. Positionsregelung mit einer bestimmten Struktur vorzusehen, wobei innerhalb der Regelung ein Signal existiert, das direkt als Schätzwert für das an dem Motor anliegende Lastmoment interpretiert werden kann. Die besondere Struktur der Regelung sieht vor, eine dynamische Vorsteuerung und einen Regler so zu kombinieren, dass die dynamische Vorsteuerung die Ansteuerung des Antriebs ohne Lastmoment (Lastmoment = 0) vornimmt und die Regelung genau den Anteil an der Stellgröße zur Ansteuerung des Antriebs beiträgt, der durch das anliegende Lastmoment bewirkt wird. In diesem Fall kann der Beitrag der Stellgröße, die das Lastmoment berücksichtigt, direkt als Angabe für das anliegende Lastmoment verwendet werden. D.h., bei der Voraussetzung, dass das Modell, das der Drehzahlsteuerung zugrunde liegt, korrekt ist, wird von der Drehzahlsteuerung genau der Beitrag der Stellgröße bereitgestellt, der dem Drehmomentenverlauf entspricht, der nötig ist, um den Antrieb entlang des gewünschten Geschwindigkeitsverlaufs zu beschleunigen. Liegt allerdings ein Lastmoment am Motor an, so kann der Antrieb - bei reiner Drehzahlsteuerung - nicht der gewünschten Geschwindigkeit folgen. Die Regelung reagiert auf diese Abweichung der gemessenen von der gewünschten Geschwindigkeit, die durch das Lastmoment hervorgerufen ist. Aus diesem Grunde entspricht der Beitrag an der Stellgröße, die von der Regelung bereitgestellt wird, im Wesentlichen einer Angabe des Lastmoments, die somit als Schätzwert für das Lastmoment verwendet werden kann.

Gemäß einer Ausführungsform wird eine Soll-Drehzahl vorgegeben, wobei die Vorsteuerung abhängig von der Soll-Drehzahl und einer zeitlichen Ableitung der Solldrehzahl die Angabe des Vorsteuerungs-Drehmoments ermittelt, und wobei die Regelung abhängig von der Differenz zwischen der Soll-Drehzahl und einer Ist-Drehzahl die Angabe des Regelungs-Drehmoments ermittelt.

Alternativ kann eine Soll-Lage vorgegeben werden, wobei die Vorsteuerung abhängig von der Soll-Lage und einer (ersten) zeitlichen Ableitung der Soll-Lage und optional einer zweiten zeitlichen Ableitung der Soll-Lage die Angabe des Vorsteuerungs-Drehmoments ermittelt, und wobei die Regelung abhängig von der Differenz zwischen der Soll-Lage und einer Ist-Lage die Angabe des Regelungs-Drehmoments ermittelt.

Weiterhin kann die vorgegebene Solldrehzahl bzw- die vorgegebene Soll-Lage in einem Filter erster Ordnung bzw. Filter zweiter Ordnung gefiltert werden, um die abgeleitete Solldrehzahl bzw. die abgeleitete Soll-Lage zu erhalten.

Abhängig von der Angabe des Soll-Drehmoments als Stellgröße kann dem Antrieb ein Soll-Motorstrom (Soll-Motorströme) vorgegeben werden.

Vorzugsweise wird der Motorstrom gemäß einer Stromregelung auf den Soll-Motorstrom geregelt.

Gemäß einem weiteren Aspekt ist ein lektrisches Gerät mit einer Antriebsvorrichtung zum Begrenzen eines Drehmoments eines elektrischen Antriebs vogesehen. Die Antriebsvorrichtung umfasst eine Vorsteuerungseinheit zum Ermitteln einer Angabe eines Vorsteuerungs-Drehmoments, wobei das Vorsteuerungs-Drehmoment einem Anteil eines Soll-Drehmoments entspricht, der ein Ansteuern des Antriebs in einem nicht durch das Lastmoment belasteten Zustand bewirkt. Die Antriebsvorrichtung umfasst weiterhin eine Regelungseinheit zum Ermitteln einer Angabe eines Regelungs-Drehmoments sowie den elektrischen Antrieb, der abhängig von der Angabe des Soll-Drehmoments, das der Summe des ermittelten Vorsteuerungs-Drehmoments und des ermittelten Regelungs-Drehmoments entspricht, angesteuert wird. Erfindungsgemäß ist vorgesehen, dass die Regelungseinheit die Angabe des Regelungs-Drehmoments als Schätzwert für das Lastmoment bereit stellt, wobei das elektrische Gerät weiterhin eine Steuereinheit umfasst, um bei Erreichen eines Schwellwertes des Lastmoments den Antrieb zu stoppen.

Gemäß einer Ausführungsform ist die Vorsteuerungseinheit ausgebildet, um abhängig von einer vorgegebenen Soll-Drehzahl und einer zeitlichen Ableitung der Solldrehzahl die Angabe des Vorsteuerungs-Drehmoments zu ermitteln, und wobei die Regelungseinheit ausgebildet ist, um abhängig von der Differenz zwischen der Soll-Drehzahl und einer Ist-Drehzahl die Angabe des Regelungs-Drehmoments zu ermitteln.

Alternativ ist die Vorsteuerungseinheit ausgebildet, um abhängig von einer vorgegebenen Soll-Lage und einer ersten und/oder zweiten zeitllchen Ableitung der Soll-Lage (Drehzahl und Beschleunigung) die Angabe des Vorsteuerungs-Drehmoment zu ermitteln, und wobei die! Regelungseinheit ausgebildet ist, um abhängig von der Differenz zwischen der Soll-Lage und einer Ist-Lage die Angabe des Regelungs-Drehmoments zu ermitteln.

Bevorzugte Ausführungsformen der Erfindung werden nachfolgend anhand der beigefügten Zeichnungen näher erläutert. Es zeigen:

Fig. 1 eine schematische Darstellung einer Drehzahlregelung gemäß einer Ausführungsform der Erfindung;
Fig. 2 eine schematische Darstellung einer Drehzahlregelung mit einer kombinierten Stromregelung gemäß einer weiteren Ausführungsform der Erfindung;
Fig. 3 einen Sollwertfilter erster Ordnung zur Verwendung in den Drehzahlregelungen gemäß der Ausführungsformen der Fig. 1 und 2; und
Fig. 4 eine schematische Darstellung einer Positionsregelung gemäß einer weiteren Ausführungsform der Erfindung.

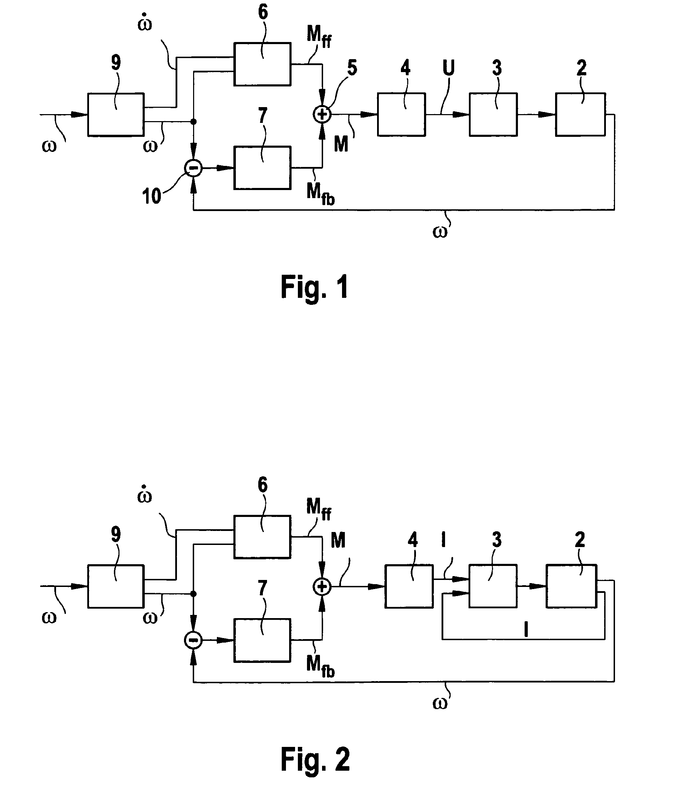

In Fig. 1 ist schematisch eine Ausführungsform einer Drehzahlregelung für einen Elektromotor 2 als Antrieb dargestellt, der über eine Ansteuereinheit 3, wie z.B. einen Umrichter, abhängig von einer Stellgröße U angesteuert wird, die eine bestimmte Drehzahl des Motors 2 vorgibt. Die Stellgröße U wird von einer Drehmomentensteuerung 4 bereitgestellt, die ein vorgegebenes Soll-Drehmoment $M_{Soll}$ in die Stellgröße U umwandelt. Eine Beschleunigung, Verzögerung oder eine konstante Drehzahl des Motors 2 ergibt sich aus diesem Soll-Drehmoment $M_{Soll}$.

Gemäß der Ausführungsform der Erfindung wird das Soll-Drehmoment $M_{soll}$ aus der Addition eines Vorsteuerungs-Drehmoments $M_{ff}$ und eines Regelungs-Drehmoments $M_{fb}$ in einem Addierelement 5 gebildet. Das Vorsteuerungs-Drehmoment $M_{ff}$ wird von der Vorsteuerung 6 aus einer Soll-Drehzahl $\omega_{soll}$ und einer Soll-Beschleunigung ($\dot{\omega}_{soll}$ , , die aus einer zeitlichen Ableitung der Soll-Drehzahl $\omega_{soll}$ bestimmt wird, ermittelt. Das von der Vorsteuerung 6 gebildete Vorsteuerungs-Drehmoment $M_{ff}$ entspricht

$$M_{ff}(t) = J \cdot \dot{\omega}_{soll}(t) + M_{Reib}(\omega_{soll}(t)) \qquad (1)$$

wobei J dem Trägheitsmoment des Rotors entspricht und MReib ($\omega_{soll}$(t)) ein beliebiges drehzahlabhängiges Reibmodell enthalten kann, wie z.B. ein Modell für eine viskose oder Coulomb'sche Reibung. Die Vorsteuerung 6 liefert also eine Angabe für das Vorsteuerungs-Drehmoment $M_{ff}$(t), die benötigt wird, um den Motor entlang eines vorgegebenen Geschwindigkeitsverlaufs ($\omega_{Wunsch} = (\omega_{soll}$(t)) in einem unbelasteten Zustand zu führen.

Die Vorsteuerung 6 benötigt neben dem vorgegebenen Geschwindigkeitsverlauf $\omega_{Soll}$(t) als Eingang auch dessen zeitliche Ableitung, d.h. den Drehbeschleunigungsverlauf $\dot{\omega}_{soll}$(t). Im Gegensatz zu den Verfahren des Standes der Technik kann hier diese Ableitung exakt bestimmt werden, da es sich hier um eine vorgegebene Soll-Drehzahl handelt. Dies hat den Vorteil, dass der Verlauf der Drehbeschleunigung $\dot{\omega}_{soll}$ (t) nicht von einem Rauschen überlagert wird, da die Drehbeschleunigung $\dot{\omega}_{soll}$ (t) aus einer Sollvorgabe $\omega_{Soll}$ (t) ermittelt wird.

Grundsätzlich können zwei Möglichkeiten unterschieden werden: Bei einer ersten Variante werden immer gleiche Soll-Drehzahlverläufe nachgefahren. In diesem Fall kann mit der Festlegung der Soll-Drehzahlverläufe auch deren zeitliche Ableitung exakt bestimmt werden. Wird die Soll-Drehzahl z.B. als Polynom definiert, so kann ihre Ableitung symbolisch berechnet werden. Verlauf der Soll-Drehzahl $\omega_{soll}$(t) und Verlauf der Soll-Drehbeschleunigung $\dot{\omega}_{soll}$(t) können gegebenenfalls gemeinsam in einer Steuereinheit gespeichert werden.

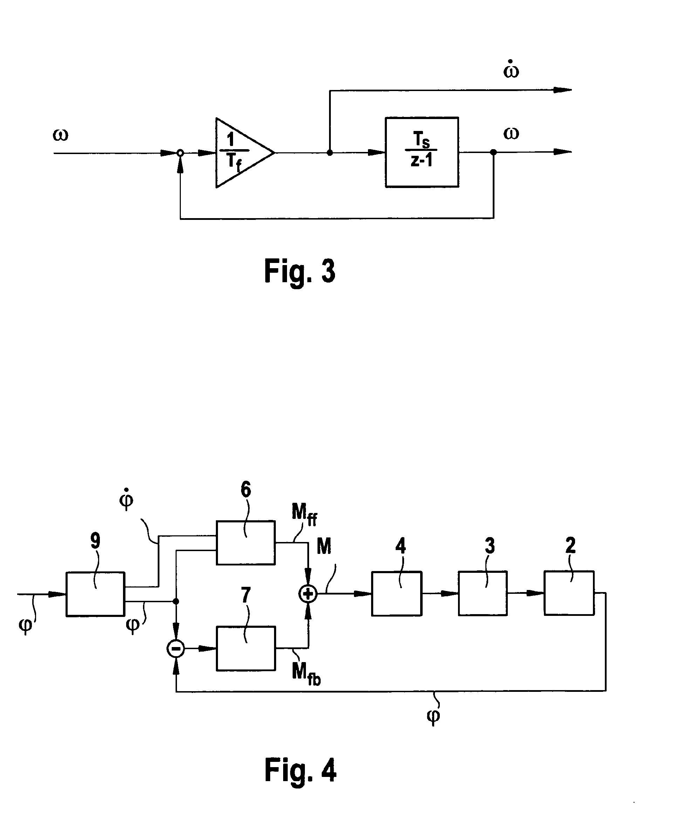

Alternativ kann der Soll-Drehzahlverlauf während des Betriebs variabel z.B. durch einen Nutzer vorgegeben werden, z.B. bei Verwendung in einem Akku-Schrauber durch eine Schieberstellung. Zukünftige Soll-Werte sind folglich nicht bekannt. In diesem Fall wird das vom Nutzer vorgegebene Wunsch-Drehzahlsignal $\omega_{Wunsch}$ mithilfe eines Filters 9, z.B. Filter erster Ordnung, gefiltert, wie es in Fig. 3 gezeigt ist. Dieses Filter wird so ausgeführt, dass es neben dem gefilterten Soll-(Wunsch-) Drehzahlsignal auch dessen exakte Ableitung ohne Zeitverzögerung bezüglich des Drehzahlsignals ausgibt.

Wenn ein Lastmoment am Motor 2 anliegt, so führt das von der Drehzahlsteuerung berechnete Vorsteuerungs-Drehmoment $M_{ff}$(t) nicht zum gewünschten Drehgeschwindigkeitsverlauf $\omega_{Soll}$(t). Um dies auszugleichen, stellt eine zusätzlich zur Vorsteuerung 6 vorgesehene Regelung 7 ein Regelungs-Drehmoment $M_{fb}$ zur Verfügung, das in dem Addierelement 5 zu dem Vorsteuerungs-Drehmoment $M_{ff}$ hinzuaddiert wird, um das Soll-Drehmoment $M_{soll}$ zu erhalten. Aus dem Drallsatz folgt dann:

$$J \cdot \dot{\omega} = M_{ff} + M_{fb} - M_{reib}(\omega) - M_{Last} \qquad (2)$$

Mit der Definition der Steuerung nach Gleichung (1) ergibt sich

$$J \cdot \dot{\omega} = J \cdot \dot{\omega}_{soll}(t) + M_{reib}(\omega_{soll}) + M_{fb} - M_{reib}(\omega) - M_{Last} \qquad (3)$$

Bei funktionierender Regelung gilt $\omega_{Soll} \approx \omega$. Damit folgt aus Gleichung (2), dass $M_{fb} \approx M_{Last}$ entspricht. D.h., das von der Regelung 7 bereitgestellte Regelungs-Drehmoment $M_{fb}$ entspricht einem Schätzwert für das Lastmoment $M_{Last}$.

Als Eingangsgröße für die Regelung 7 dient die Differenz aus einer vorgegebenen Soll-Drehzahl $\omega_{soll}$ (Wunsch-Drehzahl) und der im Motor 2 erfassten Ist-Drehzahl $\omega_{Ist}$, die beispielsweise über einen geeigneten Drehzahlsensor (nicht gezeigt) erfasst wird. Die Ist-Drehzahl kann auch durch Ableiten einer detektierten Ist-Lage erfasst werden. Die Differenz wird in einem Subtrahierer 10 gebildet, dessen Ausgabe der Regelung 7 zugeführt wird. Der Differenzwert entspricht dem Drehzahlunterschied, der durch die Regelung 7 ausgeglichen werden soll.

Die Regelung 7 kann beliebig mit einem im wesentlichen bekannten Aufbau ausgeführt sein. So kann die Regelung 7 z.B. als PI-Regler ausgeführt sein. Die Empfindlichkeit der Drehmomentenschätzung gegenüber einem Messrauschen wird reduziert, wenn die Regelungsverstärkung bei hohen Frequenzen reduziert wird, was z.B. durch ein Verzögerungsglied erster Ordnung erreicht werden kann.

Die mit der Vorsteuerung 6, der Regelung 7 und dem Addierelement 5 aufgebaute Drehzahlregelung liefert als Ausgang neben dem Regelungs-Drehmoments $M_{fb}$ als Lastmoment auch das Soll-Drehmoment $M_{Soll}$, das der Summe des Vorsteuerungs-Drehmoments $M_{ff}$ und des Regelungs-Drehmoments $M_{fb}$ entspricht. Die nachgelagerte Drehmomentsteuerung 4 ermittelt aus dem Soll-Drehmoment $M_{Soll}$ den Stellwert, der benötigt wird, um das Soll-Drehmoment $M_{Soll}$ zu erzeugen. Der Stellwert kann z.B. einem Strom oder, bei mehrphasigen Maschinen, mehreren PhasenStrömen entsprechen. Die Drehmomentsteuerung 4 kann mit einer bekannten Funktion oder einem Kennfeld realisiert sein. Die nachgeschaltete nur bei mehrphasigen Elektromotoren notwendige Ansteuerlogik 3 stellt die entsprechenden Phasen-Ströme ein.

Alternativ kann eine unterlagerte Stromregelung vorgesehen werden, wie es in Fig. 2 dargestellt ist, die den von der Drehmomentsteuerung 4 vorgegebenen Stromwert als Stellgröße in dem Motor 2 einregelt. Dadurch kann der gewünschte Strom genauer eingestellt werden und es wird dadurch eine genauere Drehmomentschätzung möglich.

Die Drehzahlregelung gemäß den zuvor beschriebenen Ausführungsformen ist im Wesentlichen unabhängig vom verwendeten Motortyp. Das Schätzverfahren ist insbesondere anwendbar für Asynchron-, Synchron- und alle Arten von Gleichstrom- und Reluktanzmotoren.

Anstelle der Drehzahlregelung, kann wie in Fig. 4 gezeigt, in entsprechender Weise eine Positionsregelung mit einer entsprechenden Vorsteuerung und einer entsprechenden Regelung aufgebaut werden, die als Eingangsgrößen anstelle der Soll-Drehzahl $\omega_{soll}$ (Wunsch-Drehzahl) und der Soll-Beschleunigung $\dot{\omega}_{soll}$ (abgeleitete Wunsch-Drehzahl) eine Soll-Lage $\rho$ ( vom Benutzer vorgegebene Wunsch-Lage) und eine Soll-Drehzahl $\dot{\varphi}_{soll}$ (abgeleitete Soll-Lage) verwendet.

Die Regelung 7 sowie die Vorsteuerung 6 können einzeln oder gemeinsam in Hardware oder in Software realisiert sein.

Das Sollwertfilter, das als Beispiel in Fig. 3 dargestellt ist, ermöglicht es, abhängig von der vorgegebenen Wunsch-Drehzahl $\omega_{Wunsch}$, die Soll-Drehzahl $\omega_{soll}$ sowie die Soll-Beschleunigung $\omega_{Soll}$ zu erhalten. Diese Werte werden der Vorsteuerung 6 zugeführt. Das Filter kann ein Filter einer beliebigen Ordnung sein. Die Soll-Drehzahl $\omega_{Soll}$ entspricht einer durch das Filter zeitlich verzögerten Wunsch-Drehzahl $\omega_{Wunsch}$.

Das aus der Regelung 7 erhaltene Regelungs-Drehmoment $M_{fb}$ entspricht dem zu schätzenden Lastmoment $M_{Last}$ und kann dafür verwendet werden, elektronisch eine Laststeuerung für elektrische Antriebe vorzusehen. Z.B. bei Einsatz in drehzahlgeregelten Elektrowerkzeugen kann durch Überwachen des Lastmoments eine elektronische Abschaltung realisiert werden, wenn das Lastmoment einen Schwellenwert übersteigt oder einen Grenzwert erreicht. Dies kann durch eine Steuereinheit realisiert werden, die den Schwellenwert vorgibt und permanent mit dem geschätzten Lastmoment vergleicht. Die Steuereinheit ist weiterhin vorgesehen, um die entsprechende Drehzahlregelung zu realisieren. Die Steuereinheit steuert bei Erreichen des Schwellenwerts ein Anhalten des Motors, was z.B. durch ein aktives Bremsen (Umpolen des Motors), durch Kurzschließen der Wicklungen oder durch Öffnen aller Transistoren im Umrichter vorgenommen werden kann. Auf diese Weise kann in Elektrogeräten mit einem Antrieb, insbesondere bei Elektrowerkzeugen auf eine mechanische Überlastsicherung verzichtet werden, wodurch der bauliche Aufwand bei der Herstellung eines Elektrowerkzeugs reduziert wird. Eine Anwendung ist beispielsweise bei Akku-Schraubern sinnvoll, wobei der Akku-Schrauber stoppt, wenn das voreingestellte Drehmoment erreicht ist, d.h. wenn die Schraube entsprechend fest angezogen ist.

Alternativ kann das Gerät auch so betrieben werden, dass, wenn das geschätzte abgegebene Moment einen voreingestellten Grenzwert erreicht, der Drehzahlsollwert oder die Bestromung entsprechend angepasst wird, so dass der gewünschte Wert des abgegebenen Drehmoments gehalten wird. Dies ist z.B. für Getriebesteller im Automobilbereich sinnvoll, die positionsgeregelt werden, und während der Synchronisierphase eine bestimmte Kraft aufbringen müssen.

**Patentansprüche**

1. Verfahren zum Begrenzen eines Drehmoments bei einem geregelten elektrischen Antrieb (2, 3); wobei der Antrieb (2, 3) abhängig von einer Angabe eines Soll-Drehmoments ($M_{soll}$) als Stellgröße angesteuert wird, wobei die Angabe des Soll-Drehmoments ($M_{Soll}$) der Summe einer in einer Vorsteuerung ermittelten Angabe eines Vorsteuerungs-Drehmoments ($M_{ff}$) und einer in einer Regelung ermittelten Angabe eines Regelungs-Drehmoments ($M_{fb}$) entspricht, wobei das Vorsteuerungs-Drehmoment ($M_{ff}$) einem Anteil des Soll-Drehmoments ($M_{Soll}$) entspricht, der ein Ansteuern des Antriebs in einem nicht durch das Lastmoment belasteten Zustand bewirkt, **dadurch gekennzeichnet, dass** als Schätzwert für das Lastmoment die Angabe des Regelungs-Drehmoments ($M_{fb}$) bereitgestellt wird, wobei bei Erreichen eines Schwellwertes des Lastmoments der Antrieb gestoppt wird.

2. Verfahren nach Anspruch 1, wobei eine Soll-Drehzahl vorgegeben wird, wobei die Vorsteuerung abhängig von der Soll-Drehzahl ($\omega_{Soll}$) und einer zeitlichen Ableitung der Soll-Drehzahl ($\omega_{Soll}$) die Angabe des Vorsteuerungs-Drehmoments (M$_{ff}$) ermittelt; und wobei die Regelung abhängig von der Differenz zwischen der Soll-Drehzahl ($\omega_{Soll}$) und einer Ist-Drehzahl die Angabe des Regelungs-Drehmoments (M$_{tb}$) ermittelt.

3. Verfahren nach Anspruch 1, wobei eine Soll-Lage vorgegeben wird, wobei die Vorsteuerung abhängig von der Soll-Lage und zumindest einer ersten zeitlichen Ableitung der Soll-Lage die Angabe des Vorsteuerungs-Drehmoments (M$_{ff}$) ermittelt; und wobei die Regelung abhängig von der Differenz zwischen der Soll-Lage und einer Ist-Lage die Angabe des Regelungs-Drehmoments ermittelt.

4. Verfahren nach Anspruch 2 oder 3, wobei die vorgegebene Soll-Drehzahl ($\omega$S$_{oll}$) bzw. die vorgegebene Soll-Lage in einem Filter erster bzw. zweiter Ordnung gefiltert wird, um die abgeleitete Solldrehzahl bzw. die abgeleitete Soll-Lage zu erhalten.

5. Verfahren nach einem der Ansprüche 1 bis 4, wobei abhängig von der Angabe des Soll-Drehmoments (M$_{Soll}$) als Stellgröße dem Antrieb ein Soll-Motorstrom vorgegeben wird.

6. Verfahren nach Anspruch 5, wobei der Motorstrom gemäß einer Stromregelung auf den Soll-Motorstrom geregelt wird.

7. Elektrisches Gerät mit einer Antriebsvorrichtung zum Begrenzen eines Drehmoments eines elektrischen Antriebs (2, 3); wobei die Antriebsvorrichtung umfasst:

   eine Vorsteuerungseinheit (6) zum Ermitteln einer Angabe eines Vorsteuerungs-Drehmoments (M$_{ff}$), wobei das Vorsteuerungs-Drehmoment (M$_{ft}$) einem Abteil eines Soll-Drehmoments (M$_{Soll}$) entspricht, der ein Ansteuern des Antriebs in einem nicht durch das Lastmoment belasteten Zustand bewirkt;
   eine Regelungseinheit (7) zum Ermitteln einer Angabe eines Regelungs-Drchmoments (M$_{th}$);
   den elektrischen Antrieb (2, 3), der abhängig von der Angabe des Soll-Drehmoments (M$_{Soll}$), das der Summe des ermittelten Vorsteuerungs-Drehmoments (M$_{ff}$) und des ermittelten Regelungs-Drehmoments (M$_{fb}$) entspricht, angesteuert wird;

   **dadurch gekennzeichnet, dass** die Regelungseinheit (7) die Angabe des Regelungs-Drehmoments (M$_{fb}$) als Schätzwert für das Lastmoment bereit stellt, wobei das elektrische Gerät weiterhin eine Steuereinheit umfasst, um bei Erreichen eines Schwellwertes des Lastmoments den Antrieb zu stoppen.

8. Elektrisches Gerät nach Anspruch 7, wobei die Vorsteuerungseinheit (6) ausgebildet ist, um abhängig von einer vorgegebenen Soll-Drehzahl ($\omega_{Soll}$) und einer zeitlichen Ableitung der Solldrehzahl die Angabe des Vorsteuerungs-Drehmoments (M$_{ll}$) zu ermitteln; und wobei die Regelungseinheit (7) ausgebildet ist, um abhängig von der Differenz zwischen der Soll-Drehzahl ($\omega_{Soll}$) und einer Ist-Drehzahl ($\omega_{Lst}$) die Angabe des Regelungs-Drehmoments (M$_{fb}$) zu ermitteln.

9. Elektrisches Gerät nach Anspruch 7, wobei die Vorsteuerungseinhelt (6) ausgebildet ist, um abhängig von einer vorgegebenen Soll-Lage und einer zeitlichen Ableitung der Soll-Lage die Angabe des Vorsteuerungs-Drehmoment (M$_{ff}$) zu ermitteln; und wobei die Regelungseinheit (7) ausgebildet ist, um abhängig von der Differenz zwischen der Soll-Lage und einer Ist-Lage die Angabe des Regelungs-Drehmaments (M$_{fb}$) zu ermitteln.

## Claims

1. Method for limiting a torque in a controlled electric drive (2, 3); wherein the drive (2, 3) is actuated as a function of a value of a setpoint torque (M$_{setp}$) as a manipulated variable, wherein the value of the setpoint torque (M$_{setp}$) corresponds to the sum of a value of a pilot control torque (M$_{ff}$) determined in a pilot control operation and a value of a control torque (M$_{fb}$) determined in a control process, wherein the pilot control torque (M$_{ff}$) corresponds to a component of the setpoint torque (M$_{setp}$) which brings about actuation of the drive in a state in which it is not loaded by the load torque, **characterized in that** the value of the control torque (M$_{fb}$) is made available as an estimated value for the load torque, wherein the drive is stopped when a threshold value of the load torque is reached.

2. Method according to Claim 1, wherein a setpoint rotational speed is predefined, wherein the pilot control determines the value of the pilot control torque (M$_{ff}$) as a function of the setpoint rotational speed ($\omega_{setp}$) and a time derivative of the setpoint rotational speed ($\omega_{setp}$) ;and wherein the control determines the value of the control torque (M$_{fb}$) as

**EP 1 939 704 B1**

a function of the difference between the setpoint rotational speed ($\omega_{\text{setp}}$) and the actual rotational speed.

3. Method according to Claim 1, wherein a setpoint position is predefined, wherein the pilot control determines the value of the pilot control torque ($M_{\text{ff}}$) as a function of the setpoint position and of at least one first time derivative of the setpoint position; and wherein the control determines the value of the control torque as a function of the difference between the setpoint position and an actual position.

4. Method according to Claim 2 or 3, wherein the predefined setpoint rotational speed ($\omega_{\text{setp}}$) and/or the predefined setpoint position are/is filtered in a filter of the first or second order in order to obtain the derived setpoint rotational speed and/or the derived setpoint position.

5. Method according to one of Claims 1 to 4, wherein a setpoint motor current is predefined for the drive as a function of the value of the setpoint torque ($M_{\text{setp}}$) as a manipulated variable.

6. Method according to Claim 5, wherein the motor current is adjusted to the setpoint motor current in accordance with a current control process.

7. Electrical device having a drive device for limiting a torque of an electric drive (2, 3), wherein the drive device comprises:

   - a pilot control unit (6) for determining a value of a pilot control torque ($M_{\text{ff}}$), wherein the pilot control torque ($M_{\text{ff}}$) corresponds to a component of a setpoint torque ($M_{\text{setp}}$) which brings about actuation of the drive in a state in which it is not loaded by the load torque;
   - a control unit (7) for determining a value of a control torque ($M_{\text{fb}}$) ;
   - the electric drive (2, 3) which, as a function of the value of the setpoint torque ($M_{\text{setp}}$) which corresponds to the sum of the determined pilot control torque ($M_{\text{ff}}$) and the determined control torque ($M_{\text{fb}}$), is actuated;

   **characterized in that** the control unit (7) makes available the value of the control torque ($M_{\text{fb}}$) as an estimated value for the load torque, wherein the electrical device also comprises a control unit for stopping the drive when a threshold value of the load torque is reached.

8. Electrical device according to Claim 7, wherein the pilot control unit (6) is designed to determine the value of the pilot control torque ($M_{\text{ff}}$) as a function of a predefined setpoint rotational speed ($w_{\text{setp}}$) and of a time derivative of the setpoint rotational speed; and wherein the control unit (7) is designed to determine the value of the control torque ($M_{\text{fb}}$) as a function of the difference between the setpoint rotational speed ($\omega_{\text{setp}}$) and an actual rotational speed ($\omega_{\text{act}}$).

9. Electrical device according to Claim 7, wherein the pilot control unit (6) is designed to determine the value of the pilot control torque ($M_{\text{ff}}$) as a function of a predefined setpoint position and of a time derivative of the setpoint position; and wherein the control unit (7) is designed to determine the value of the control torque ($M_{\text{fb}}$) as a function of the difference between the setpoint position and an actual position.


**Revendications**

1. Procédé de limitation d'un couple de rotation dans un entraînement électrique (2, 3) réglé ; l'entraînement (2, 3) étant commandé en fonction d'une indication d'un couple théorique de rotation ($M_{\text{soll}}$) servant de grandeur de réglage, l'indication du couple théorique de rotation ($M_{\text{soll}}$) correspondant à la somme d'une indication d'un couple de rotation de commande par anticipation ($M_{\text{ff}}$) calculée lors d'une commande par anticipation et à une indication d'un couple de rotation de réglage ($M_{\text{fb}}$) calculée lors d'un réglage, le couple de rotation de commande par anticipation ($M_{\text{ff}}$) correspondant à une partie du couple théorique de rotation ($M_{\text{soll}}$) provoquant une excitation de l'entraînement à un état non chargé par le couple de charge, **caractérisé en ce que** la valeur d'estimation du couple de charge mise à disposition est l'indication du couple de rotation de réglage ($M_{\text{fb}}$), l'entraînement étant arrêté lorsqu'une valeur seuil du couple de charge est atteinte.

2. Procédé selon la revendication 1, un nombre de tours théorique étant prédéfini, la commande par anticipation calculant l'indication du couple de rotation de commande par anticipation ($M_{\text{ff}}$) en fonction du nombre de tours théorique ($\omega_{\text{soll}}$) et d'une dérivée dans le temps du nombre de tours théorique ($\omega_{\text{soll}}$) ; et le réglage calculant l'indication du couple de rotation de réglage ($M_{\text{fb}}$) en fonction de la différence entre le nombre de tours théorique ($\omega_{\text{soll}}$)

et d'un nombre de tours réel.

**3.** Procédé selon la revendication 1, une position théorique étant prédéfinie, la commande par anticipation calculant l'indication du couple de rotation de commande par anticipation ($M_{ff}$) en fonction de la position théorique et d'au moins une première dérivée dans le temps de la position théorique ; et le réglage calculant l'indication du couple de rotation de réglage en fonction de la différence entre la position théorique et une position réelle.

**4.** Procédé selon la revendication 2 ou 3, le nombre de tours théorique ($\omega_{soll}$) prédéfini et/ou la position théorique prédéfinie étant filtrés dans un filtre selon un premier et/ou deuxième ordre, pour obtenir le nombre de tours théorique dérivé et/ou la position théorique dérivée.

**5.** Procédé selon l'une quelconque des revendications 1 à 4, un courant moteur théorique étant prédéfini pour l'entraînement en fonction de l'indication du couple théorique de rotation ($M_{soll}$) comme grandeur de réglage.

**6.** Procédé selon la revendication 5, le courant moteur étant réglé en fonction d'un réglage du courant sur le courant moteur théorique.

**7.** Appareil électrique doté d'un dispositif d'entraînement servant à limiter un couple de rotation d'un entraînement électrique (2, 3) ; le dispositif d'entraînement comprenant :

- une unité de commande par anticipation (6) servant à calculer une indication d'un couple de rotation de commande par anticipation ($M_{ff}$), le couple de rotation de commande par anticipation ($M_{ff}$) correspondant à une partie d'un couple théorique de rotation ($M_{soll}$) provoquant une excitation de l'entraînement dans un état non chargé par le couple de charge ;
- une unité de réglage (7) servant à calculer une indication d'un couple de rotation de réglage ($M_{fb}$) ;
- l'entraînement électrique (2, 3), qui correspond à la somme du couple de rotation de commande par anticipation ($M_{ff}$) calculé et du couple de rotation de réglage ($M_{fb}$) calculé, étant commandé en fonction de l'indication du couple de rotation théorique ($M_{soll}$) ; **caractérisé en ce que** l'unité de réglage (7) met à disposition l'indication du couple de rotation de réglage ($M_{fb}$) sous la forme d'une valeur estimée pour le couple de charge, l'appareil électrique comprenant en outre une unité de commande permettant d'arrêter l'entraînement lorsqu'une valeur seuil du couple de charge est atteinte.

**8.** Appareil électrique selon la revendication 7, l'unité de commande par anticipation (6) étant réalisée de façon à calculer l'indication du couple de rotation de commande par anticipation ($M_{ff}$) en fonction d'un nombre de tours théorique ($\omega_{soll}$) prédéfini et d'une dérivée dans le temps du nombre de tours théorique ; et l'unité de réglage (7) étant réalisée pour calculer l'indication du couple de rotation de réglage ($M_{fb}$) en fonction de la différence entre le nombre de tours théorique ($\omega_{soll}$) et un nombre de tours réel ($\omega_{Ist}$).

**9.** Appareil électrique selon la revendication 7, l'unité de commande par anticipation (6) étant réalisée de façon à calculer l'indication du couple de rotation de commande par anticipation ($M_{ff}$) en fonction d'une position théorique prédéfinie et d'une dérivée dans le temps de la position théorique ; et l'unité de réglage (7) étant réalisée de façon à calculer l'indication du couple de rotation de réglage ($M_{fb}$) en fonction de la différence entre la position théorique et une position réelle.

Fig. 1

Fig. 2

EP 1 939 704 B1

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3708266

- US 6184644 B1